# EUROPEAN PATENT SPECIFICATION

(11) **EP 2 439 084 B1**
(45) Date of publication and mention of the grant of the patent: **03.09.2014**
(21) Application number: 11183926.2
(22) Date of filing: 05.10.2011
(51) Int. Cl.: B60C 15/06

(54) **A pneumatic tire with a knitted fabric as reinforcing structure**
Luftreifen mit einem Gewirk als Verstärkungsstruktur
Pneu avec tissu tricoté en tant que structure de renfort

(30) Priority: 07.10.2010 US 899803
(43) Date of publication of application: 11.04.2012
(73) Proprietor: The Goodyear Tire & Rubber Company, Akron, OH 44316-0001 (US)
(72) Inventor: Lechtenboehmer, Annette, L-9048 Ettelbruck (LU); Wieczorek, David Gilbert, 8140 Bridel (LU); Beck, Raphael, L-8558 Reichlange (LU)
(74) Representative: Kutsch, Bernd

(56) References cited:
- EP-A1- 0 573 853
- EP-A1- 2 165 861
- EP-A2- 2 147 805
- US-A- 2 947 340
- US-A- 3 240 251
- US-A- 3 679 516
- US-A1- 2010 065 179
- US-B1- 6 659 148

## Description

### Field of the Invention

The present invention relates to a pneumatic tire, and more particularly, to a radial pneumatic tire with a flipper.

### Background of the Invention

A pneumatic tire typically includes a pair of axially separated inextensible beads. A circumferentially disposed bead filler apex extends radially outward from each respective bead. At least one carcass ply extends between the two beads. The carcass ply has axially opposite end portions, each of which is turned up around a respective bead and secured thereto. Tread rubber and sidewall rubber is located axially and radially outward, respectively, of the carcass ply.

The bead area is one part of the tire that contributes a substantial amount to the rolling resistance of the tire, due to cyclical flexure which also leads to heat buildup. Under conditions of severe operation, as with runflat and high performance tires, the flexure and heating in the bead region can be especially problematic, leading to separation of mutually adjacent components that have disparate properties, such as the respective moduli of elasticity. In particular, the ply turnup ends may be prone to separation from adjacent structural elements of the tire.

A conventional ply may be reinforced with materials such as nylon, polyester, rayon, and/or metal, which have much greater stiffness (i.e., modulus of elasticity) than the adjacent rubber compounds of which the bulk of the tire is made. The difference in elastic modulus of mutually adjacent tire elements may lead to separation when the tire is stressed and deformed during use.

A variety of structural design approaches have been used to control separation of tire elements in the bead regions of a tire. For example, one method has been to provide a "flipper" surrounding the bead and the bead filler. The flipper works as a spacer that keeps the ply from making direct contact with the inextensible beads, allowing some degree of relative motion between the ply, where it turns upward under the bead, and the respective beads. In this role as a spacer, a flipper may reduce disparities of strain on the ply and on the adjacent rubber components of the tire (e.g., the filler apex, the sidewall rubber, in the bead region, and the elastomeric portions of the ply itself).

The flipper may be made of a fabric in which each fiber, thread, or cord has a generally round cross-section. When a flipper is cured with a tire, the stiffness of the fibers/cords becomes essentially the same in any direction within the plane of the flipper.

In addition to the use of flippers as a means by which to reduce the tendency of a ply to separate, or as an alternative, another method that has been used involves the placement of "chippers." A chipper is a circumferentially deployed metal or fabric layer that is disposed within the bead region in the portion of the tire where the bead fits onto the wheel rim. More specifically, the chipper lies inward of the wheel rim (i.e., toward the bead) and outward (i.e., radially outward, relative to the bead viewed in cross section) of the portion of the ply that turns upward around the bead. Chippers serve to stiffen, and increase the resistance to flexure of, the adjacent rubber material, which itself is typically adjacent to the turnup ply endings.

US-A- 2010/0065179 describes a pneumatic tire with a LENO weave flipper or chipper.

US-A- 3,240,251 describes a cotton tire fabric and method of making the same wherein the flipper is made of a fabric treated with an adhesion to motor.

US-A-2,947,340 describes a tire comprising a reinforcing structure comprising a layer of knitted fabric.

### Summary of the Invention

The invention relates to a pneumatic tire in accordance with claim 1.

Dependent claims refer to preferred embodiments of the invention.

In one aspect, a pneumatic tire in accordance with the present invention includes an axis of rotation, a carcass, a tread disposed radially outward of the carcass, a belt structure disposed radially between the carcass and the tread, and a reinforcing structure providing a buffer for absorbing shear strain. The reinforcing structure includes a layer of a knitted fabric. The layer includes first yarns and second yarns.

The reinforcing structure of the carcass is a flipper.

In a preferred aspect of the present invention, the flipper separates a reinforced ply of the carcass from a bead of the carcass.

In still another preferred aspect of the present invention, the flipper acts as a strain-relieving layer between the bead and the reinforced ply.

In yet another preferred aspect of the present invention, the fabric has a 5 EPI to 18 EPI construction.

In still another preferred aspect of the present invention, the first yarns are 940/1 dtex aramid and the second yarns are 1220/1 dtex rayon.

In yet another preferred aspect of the present invention, the first yarns have a density of 14 EPI and the second yarns have a density of 12 EPI.

In still another preferred aspect of the present invention, the pneumatic tire is a radial runflat passenger tire.

In yet another preferred aspect of the present invention, the pneumatic tire is a high performance tire.

In still another preferred aspect of the present invention, the layer further comprises an adhesion promoter disposed thereon.

In yet another preferred aspect of the present invention, the reinforcing structure of the carcass is a flipper having two or more layers.

In still another preferred aspect of the present invention, the flipper includes a layer of rubber between the fabric layers.

In yet another preferred aspect of the present invention, the first yarns comprise at least two fibers of different fiber materials.

In still another preferred aspect of the present invention, the second yarns comprise at least two fibers of different fiber materials.

In yet another preferred aspect of the present invention, the first yarns extend circumferentially and radially at an angle of 30 degrees to 55 degrees relative to the radial direction of the tire.

In still another preferred aspect of the present invention, the reinforcing structure separates a reinforced ply of the carcass from a bead of the carcass, the reinforcing structure terminating within an apex of the pneumatic tire.

In still another aspect of the invention, the reinforcing structure is a chipper or a patch uniting flipper and chipper in the bead area of the tire.

### Definitions

"Apex" means an elastomeric filler located radially above the bead core and between the plies and the turnup ply.

"Axial" and "axially" are used herein to refer to lines or directions that are parallel to the axis of rotation of the tire.

"Cable" means a cord formed by twisting together two or more plied yarns.

"Carcass" means the tire structure apart from the belt structure, tread, undertread, and sidewall rubber over the plies, but including the beads.

"Chipper" refers to a preferably narrow band of fabric or cords such as steel cords located in the bead area whose function is to reinforce the bead area and stabilize the radially inwardmost part of the sidewall.

"Circumferential" means lines or directions extending along the perimeter of the surface of the annular tire parallel to the Equatorial Plane (EP) and perpendicular to the axial direction.

"Cord" means one of the reinforcement strands which the reinforcement structures of the tire comprise.

"Flipper" refers to a reinforcing fabric around the bead wire for strength and to tie the bead wire in the tire body.

"Ply" means a cord-reinforced layer of rubber-coated radially deployed or otherwise parallel cords.

"Radial" and "radially" are used to mean directions radially toward or away from the axis of rotation of the tire.

"Yarn" is a generic term for a continuous strand of textile fibers or filaments. Yarn occurs in the following forms: 1) a number of fibers twisted together; 2) a number of filaments laid together without twist; 3) a number of filaments laid together with a degree of twist; 4) a single filament with or without twist (monofilament); 5) a narrow strip of material with or without twist.

### Brief Description of the Drawings

The structure, operation, and advantages of the invention will become more apparent upon contemplation of the following description taken in conjunction with the accompanying drawings, wherein:
FIG. 1 represents a schematic cross-sectional view of an example tire for use with the present invention;
FIG. 2 represents a schematic detail view of the bead region of the example tire shown in FIG. 1;
FIG. 3 represents a schematic detail view of another bead region for use with present invention; and

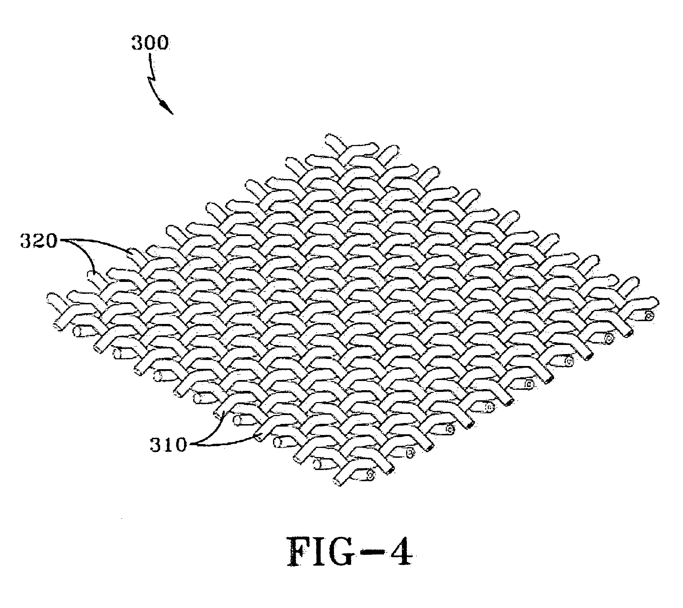

FIG. 4 represents a schematic detail of an example woven fabric having a layer 300 with a first set of yarns 310 interlaced with a second set of yarns 320.

### Detailed Description of an Example Embodiment

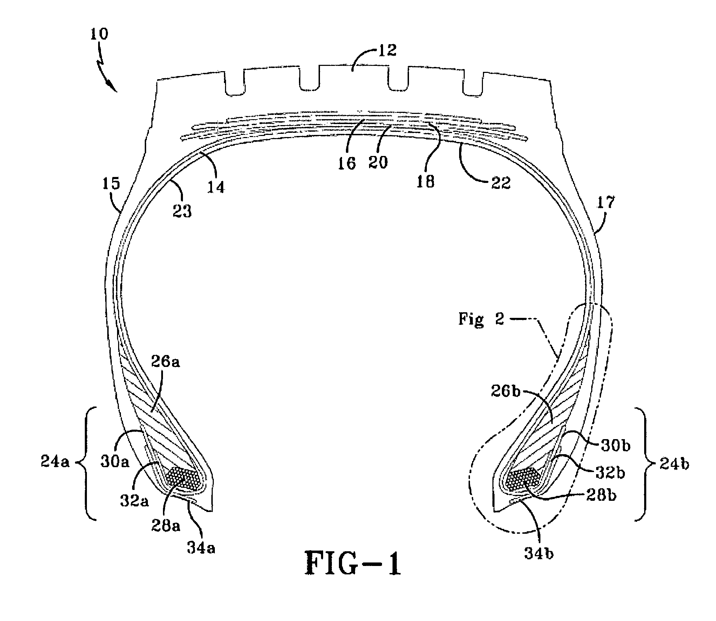

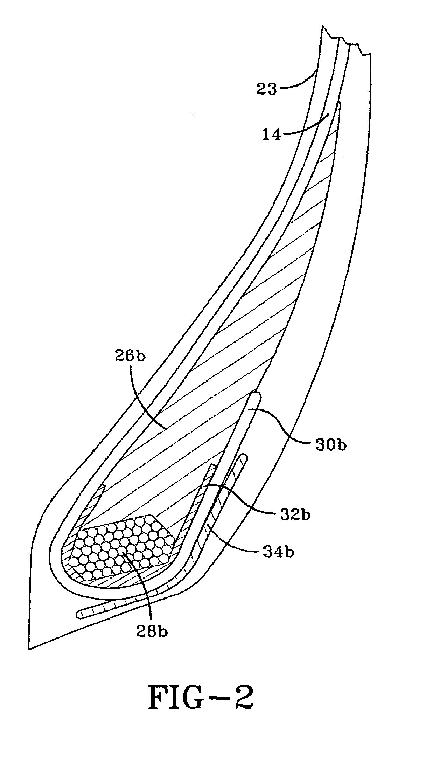

FIG. 1 shows an example tire 10 for use with reinforcing structures, such as flippers, in accordance with the present invention. The example tire 10 has a tread 12, an inner liner 23, a belt structure 16 comprising belts 18, 20, a carcass 22 with preferably a single carcass ply 14, two sidewalls 15,17, and two bead regions 24a, 24b comprising bead filler apexes 26a, 26b and beads 28a, 28b. The example tire 10 is suitable, for example, for mounting on a rim of a passenger vehicle. The carcass ply 14 includes a pair of axially opposite end portions 30a, 30b, each of which is secured to a respective one of the beads 28a, 28b. Each axial end portion 30a or 30b of the carcass ply 14 is turned up and around the respective bead 28a, 28b to a position sufficient to anchor each axial end portion 30a, 30b, as seen in detail in FIGS. 1 and 2.

The carcass ply 14 may be a rubberized ply having a plurality of substantially parallel carcass reinforcing members made of such material as polyester, rayon, or similar suitable organic polymeric compounds. The carcass ply 14 engages the axial outer surfaces of two flippers 32a, 32b and the axial inner surfaces of two chippers 34a, 34b.

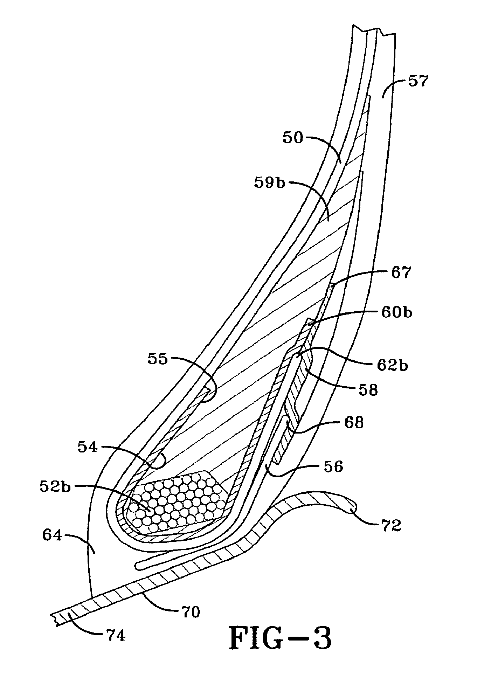

FIG. 3 shows, in cross-sectional view, the bead region of another example tire for use with reinforcing structures, such as flippers, in accordance with the present invention. A carcass ply 50 wraps around a bead 52b and is separated from the bead by a flipper 54. The flipper 54 may be a layer of knitted fabric disposed around the bead 52b and inward of a portion of the carcass ply 50 which turns up under the bead. The knitted fabric flipper 54 may have and preferably has physical properties (such as shearing modulus of elasticity) intermediate to those of a rigid metal bead 52b and a less rigid carcass ply 50. The knitted fabric flipper 54 therefore may serve as an active strain-relieving layer separating the bead 52b from the carcass ply 50. The carcass ply 50 may be reinforced with metal, as is conventional in the tire art.

The example tire of FIG. 3 also may have a fabric chipper 56 located in the bead area for reinforcing the bead area and stabilizing the axially inwardmost part of the sidewall 57. The flipper 54 and chipper 56, along with the patch 58 uniting them, are discussed separately below, and then in operational conjunction with one another.

The knitted fabric flipper 54 wraps around the bead 52b and extends radially outward into the sidewall regions of the example tire. The axially inward portion 55 of knitted fabric flipper 54 terminates within the bead-filler apex 59b. The axially outward portion 60b of the knitted fabric flipper 54 lies radially beyond a turnup end 62b, which itself is located radially beyond the radially outermost reach of the chipper 56 (discussed separately below). The axially outwardmost portions of the turnup end 62b of the carcass ply 50 may extend radially outward 15-30 millimeters beyond the top of a wheel rim flange 72 of a wheel rim 70.

As shown in FIG. 3, the knitted fabric flipper 54 is deployed about the bead 52b which is itself circumferentially disposed within the example tire. An axially inward portion 55 of the knitted fabric flipper 54 extends radially outward from the bead 52b to a location approximately axially adjacent to the top of the wheel rim flange 72 of the wheel rim 70. On an axially outward side, the knitted fabric flipper 54 extends radially outward from the bead 52b to an end 60b above the wheel rim flange 72. The radially outermost reach of the end 60b of the knitted fabric flipper 54 may extend between 7-15 millimeters beyond the radially outermost reach of the turnup end 62b. The knitted fabric flipper 54 may be termed "active" because it actively absorbs (i.e. during tire deflection) differential strains between the relatively rigid bead 52b and the relatively less rigid carcass ply 50.

The chipper 56 is disposed adjacent to the portion of the carcass ply 50 that is wrapped around the bead 52b. More specifically, the chipper 56 is disposed on the opposite side of the portion of the carcass ply 50 from the knitted fabric flipper 54. The axially inwardmost portion of the knitted fabric chipper 56 lies in the portion of the bead region that, when the tire is mounted on the wheel rim 70, would lie closest to a circularly cylindrical part 74 of the wheel rim. The axially and radially outwardmost portion of the chipper 56 lies in the portion of the bead region that, when the tire is mounted on the wheel rim 70, would lie axially inward of the circular portion of the wheel rim 70, being separated from the circular portion of the wheel rim by tire rubber such as a toe guard 64.

In other words, as can be seen in FIG. 3, the chipper 56 is disposed circumferentially about the radially inwardmost portion of the carcass ply 50 where the carcass ply turns up under the bead 52b. The chipper 56 may extend radially outward, being more or less parallel with the turned up end 62b of the carcass ply 50.

The chipper 56 may protect the portion of the carcass ply 50 that wraps around the bead 52b from the strains in the rubber that separates the chipper from the wheel rim 70. The chipper 56 reinforces the bead area and stabilizes the radially inwardmost part of the sidewall 57. In other words, the chipper 56 may absorb deformation in a way that minimizes the transmission of stress-induced shearing strains that arise inward from the wheel rim 70, through the toe guard 64, to the turned up portion 62b of the carcass ply 50, where the chipper is most immediately adjacent to the rigid bead 52b.

The optional patch 58 shown in FIG. 3 is circumferentially disposed about the bead 52b in such a way as to overlie the radially outermost regions 68 of the chipper 56 and the turned up ends 62b of the carcass ply 50. The patch 58 performs a function similar to that of those of the chipper 56 and the knitted fabric flipper 54. More specifically, the patch 58 may absorb shearing stresses in the rubber parts which might otherwise induce separation of the flexible rubber from the less flexible material of the chipper 56 and the carcass ply 50. The patch 58 may, for example, be made of nylon fabric. The radially outwardmost portion 67 of the patch 58 may reach to a minimum level such as extending by at least 5 mm above the upper end 60b of the knitted fabric flipper 54, and preferably 10-15 mm above. The radially inwardmost portion of the patch 58 may overlap 10 mm with the chipper 56.

The net effect of the incorporation of the knitted fabric flipper 54 is to provide a strain buffer that relieves or absorbs differential shearing strains that otherwise, were the flippers not present, could lead to separation of the adjacent materials that have disparate shearing moduli of elasticity. Furthermore, this reinforced construction may increase durability of the tire by means of the incorporation of a smaller number of components than for standard constructions with gum strips.

In accordance with the present invention, the knitted fabric flippers 32a, 32b, 54 of the example tires of FIGS. 1-3 may comprise knitted fabric. A flipper 54 may comprise a layer of knitted fabric having a first set of yarns interlaced with a second set of yarns.

The layer of the knitted fabric flippers 32a, 32b, 54 may be made of a highly deformable elastic knitted fabric of low apparent density, allowing elasticity due to sliding of the threads and the deformation of the stitches. The construction of the layer may further allow some degree of mechanical decoupling between the different yarns thereby providing structural flexibility in adapting to the deformations of the tire 10 during use. Various kinds of material may be selected to produce this layer. Thickness, proportion of voids, and density may be directly related to the material and the structure of the knitted fabric layer (thread diameter, number of stitches per dm, tightness).

The layer may thus define a bielastic fabric having an elastic elongation ratio of at least 8% and a stitch size of less than or equal to 150 stitches per decimeter. The layer may be constructed of synthetic fibers, natural fibers, and/or a blend of these fibers. The layer may comprise polyamides, polyesters, rayon, cotton, wool, aramid, silk and/or flax.

A proportion of elastic threads such as polyurethane, latex, natural, or synthetic rubber may be useful to provide the elastic return, which aids in application of the fabric. Thus, as an example, the bielastic/knitted fabric flipper 32a, 32b, 54 in accordance with the present invention, may have a thickness from 0.2 mm to 2 mm and a mass per unit area from 70 to 700 g/m². Further, the bielastic/knitted fabric flipper 32a, 32b, 54 may have a density from 0.02 g/cm³ to 0.50 g/cm³.

Additionally, the bielastic/knitted fabric flipper 32a, 32b, 54 may have a void volume of at least 40% so that the knitted fabric will be sufficiently compressible. The void volume may be calculated by comparing the density of the knitted fabric with that of the compact material forming its matrix, measured by any suitable.

Non-elastomeric materials may also be used for the matrix of the bielastic/knitted fabric flipper 32a, 32b, 54, including natural textile fibers such as cotton, wool, flax, hemp, silk, etc., artificial textile fibers such as rayon, synthetic textile fibers such as polyester, polyvinyl acetate, nylon (including nylon 6, nylon 6,6, and nylon 4,6), polyethylene naphthalate (PEN), rayon, polyketone, PBO polyamide, aramid, polyvinyl chloride, polyolefins, etc., and/or mineral fibers such as glass, carbon, silica, mineral wool, etc. The elastomeric material may be natural rubber, polybutadiene, SBR, polyurethane, etc.

The yarns may be a spun staple yarn, a multifilament yarn, and/or a monofilament yarn formed of a suitable material. The yarns may also be hybrid yarns. Hybrid yarns may be multiply yarns, made up of at least 2 fibers of different material (for example, cotton and nylon). These different fiber materials may produce hybrid yarns with various chemical and physical properties. Hybrid yarns may be able to change the physical properties of the final product in which they are used. Example hybrid yarns may be an aramid fiber with a nylon fiber, an aramid fiber with a rayon fiber, and an aramid fiber with a polyester fiber.

As used herein, mechanical resiliency of a yarn is the ability of the yarn to displace longitudinally without an elastic deformation of the material. Mechanical resiliency allows the knitted fabric layer to have a minor amount of resilient elongation for compatibility with the example tires of FIGS. 1-3, but use stronger yarns in the flipper 32a, 32b, 54.

The knitted fabric layer is an open construction fabric which permits the strike through of rubber in a tire for a better bonded construction. The openness of the fabric used for the layer is usually determined by the spacing and character of the yarns.

The layer may be treated with an adhesion promoter. Examples of adhesion promoters include resorcinol formaldehyde latex (RFL), isocyanate based material, epoxy based material, and materials based on melamine formaldehyde resin. The LENO tape may also have a tackified finish, or green tack, applied for facilitating adhesion during the building process of a green tire. The selection of materials for the tackified finish may depend upon the materials selected for use in the tire. Tackified finishes may be achieved by various methods such as coating the fabric in an aqueous blend of rosin and rubber lattices, or with a solvent solution of an unvulcanized rubber compound.

Further, the flipper 32a, 32b, 54 may comprise multiple layers, e.g. two, three, or even more layers, to provide extra strength for the flipper. When more than one layer is used for the flipper 32a, 32b, 54, a layer of unvulcanized rubber may be placed between the layers to ensure an effective bond. The formation of the layer may begin with the acquisition of the basic yarns for the fabric. Subsequently, the yarns may be twisted to provide additional mechanical resilience. After the twisting, the yarns may be placed on a large beam for the formation of the layer. The layer may be formed knitting with the appropriate spacing of the yarns. After the layer formation, the layer may be finished with adhesive promoter, such as an RFL treatment. If a tackified finish is desired, this is provided following the adhesive promoter finishing. The final layer may be slit into the specific widths for placement on a spool.

The flipper 32a, 32b, 54 in accordance with the present invention improves prior art runflat and high performance tires by optimizing runflat mileage, high speed capability, and handling characteristics, without increasing manufacturing complexity. Additionally, the flipper 32a, 32b, 54 may reduce noise due to vibration damping in the bead area (i.e., circumferential reinforcement provided knitted layer). Further, the layer need not be calendered and may be applied at the tire building machine (i.e., a spool of the layer directly applied at the tire building machine). Also, the layer may be applied symmetrically to both beads, or asymmetrically to only one bead. The width of the layer may depend on specific design requirements. The yarns of the flipper 32b, 54 may be oriented radially or at an angle, such as in a range from 15 to 60 degrees, or more specifically from 30 to 55 degrees, with respect to the circumferential direction of the tire. The yarns may have a density of 5 EPI to 18 EPI.

As stated above, a flipper 32a, 32b, 54 in accordance with the present invention produces increased runflat mileage, high speed capability and handling characteristics, and vibration damping, without increasing manufacturing complexity. This flipper 32a, 32b, 54 thus enhances the performance of the pneumatic tire 10, even though the complexities of the structure and behavior of the pneumatic tire are such that no complete and satisfactory theory has been propounded.

Flipper and chipper cord characteristics affect the other components of a pneumatic tire (i.e., flipper/chipper affects carcass ply, belt, overlay, etc.), leading to a number of components interrelating and interacting in such a way as to affect a group of functional properties (noise, handling, durability, comfort, high speed, and mass), resulting in an unpredictable and complex composite. Whether one or more functional characteristics of the tire is improved, degraded, or unaffected, and by what amount, is unpredictable without the insight, experimentation, and testing conducted by the inventors.

## Claims

1. A pneumatic tire comprising a reinforcing structure (32a, 32b, 54) comprising a layer of knitted fabric comprising first yarns and second yarns, **characterized in that** the reinforcing structure (32a, 32b, 54) is a flipper.

2. The pneumatic tire of claim 1 wherein the reinforcing structure (32a, 32b, 54) provides a buffer for absorbing shear strain.

3. The pneumatic tire of claim 1 or 2 comprising a carcass (22), a tread (12) disposed radially outward of the carcass (22) and a belt structure (16) disposed radially between the carcass (22) and the tread (12).

4. The pneumatic tire of at least one of the previous claims wherein the reinforcing structure (32a, 32b, 54) has 5 ends per 2.54 cm (epi) to 18 ends per 2.54 cm construction.

5. The pneumatic tire of at least one of the previous claims wherein the material of the first yarns is different from the material of the second yarns, and/or wherein at least one of the density, the yarn construction and the dtex of the first yarns is different from the respective parameter of the second yarns.

6. The pneumatic tire of at least one of the previous claims wherein the material of the first yarns is polyaramide and the material of the second yarns is rayon; and/or wherein the first yarns are a 940/1 dtex polyaramide yarns and the second yarns are a 1220/1 dtex rayon yarns.

7. The pneumatic tire of at least one of the previous claims wherein the first yarns have a density of 14 ends per 2.54 cm (epi) and the second yarns have a density of 12 ends per 2.54 cm construction; and/or wherein the first yarns have a density of at least 2 ends per 2.54 cm higher than the second yarns.

8. The pneumatic tire of at least one of the previous claims wherein the layer of knitted fabric comprises an adhesion promoter disposed thereon.

9. The pneumatic tire of at least one of the previous claims wherein the flipper comprises two or more layers, or wherein the flipper comprises two or more fabric layers and a layer of rubber between the fabric layers.

10. The pneumatic tire of at least one of the previous claims wherein the first yarns and/or the second yarns comprise at least two fibers of different materials.

11. The pneumatic tire of at least one of the previous claims wherein the first yarns extend at an angle of 30 to 55 degrees relative to the radial direction of the tire (10).

12. The pneumatic tire of at least one of the previous claims wherein the tire (10) is a runflat passenger tire.

## Patentansprüche

1. Luftreifen, umfassend eine Verstärkungsstruktur (32a, 32b, 54), umfassend eine Gewirklage, die erste Garne und zweite Garne umfasst, **dadurch gekennzeichnet, dass** die Verstärkungsstruktur (32a, 32b, 54) eine Kernfahne ist.

2. Luftreifen nach Anspruch 1, wobei die Verstärkungsstruktur (32a, 32b, 54) einen Puffer zum Absorbieren von Scherdehnung bereitstellt.

3. Luftreifen nach Anspruch 1 oder 2, umfassend eine Karkasse (22), eine radial auswärts von der Karkasse (22) angeordnete Lauffläche (12) und eine radial zwischen der Karkasse (22) und der Lauffläche (12) angeordnete Gürtelstruktur (16),

4. Luftreifen nach mindestens einem der vorgenannten Ansprüche, wobei die Verstärkungsstruktur (32a, 32b, 54) einen Aufbau von 5 Enden pro 2,54 cm (EPI) bis 18 Enden pro 2,54 cm aufweist.

5. Luftreifen nach mindestens einem der vorgenannten Ansprüche, wobei das Material der ersten Garne verschieden von dem Material der zweiten Garne ist, und/oder wobei mindestens eines der Dichte, des Garnaufbaus und des dtex der ersten Garne verschieden von dem jeweiligen Parameter der zweiten Garne ist.

6. Luftreifen nach mindestens einem der vorgenannten Ansprüche, wobei das Material der ersten Garne Polyaramid ist und das Material der zweiten Garne Rayon ist; und/oder wobei die ersten Garne 940/1 dtex-Polyaramidgarne sind und die zweiten Garne 1220/1 dtex-Rayongarne sind.

7. Luftreifen nach mindestens einem der vorgenannten Ansprüche, wobei die ersten Garne eine Dichte von 14 Enden pro 2,54 cm (EPI) aufweisen und die zweiten Garne einen Aufbau mit einer Dichte von 12 Enden pro 2,54 cm (EPI) aufweisen; und/oder wobei die ersten Garne eine um mindestens 2 Enden pro 2,54 cm höhere Dichte als die zweiten Garne aufweisen.

8. Luftreifen nach mindestens einem der vorgenannten Ansprüche, wobei die Gewirklage einen darauf angebrachten Haftvermittler umfasst.

9. Luftreifen nach mindestens einem der vorgenannten Ansprüche, wobei die Kernfahne zwei oder mehr Lagen umfasst, oder wobei die Kernfahne zwei oder mehr Gewebelagen und eine Gummilage zwischen den Gewebelagen umfasst.

10. Luftreifen nach mindestens einem der vorgenannten Ansprüche, wobei die ersten Garne und/oder die zweiten Garne mindestens zwei Fasern aus unterschiedlichen Materialien umfassen.

11. Luftreifen nach mindestens einem der vorgenannten Ansprüche, wobei die ersten Garne sich in einem Winkel von 30 bis 55 Grad bezüglich der radialen Richtung des Reifens (10) erstrecken.

12. Luftreifen nach mindestens einem der vorgenannten Ansprüche, wobei der Reifen (10) ein Personenwagenreifen mit Notlaufeigenschaften ist.

## Revendications

1. Bandage pneumatique comprenant une structure de renforcement (32a, 32b, 54) comprenant une couche d'un tissu tricoté comprenant des premiers fils et des deuxièmes fils, **caractérisé en ce que** la structure de renforcement [32a, 32b, 54) est une languette de protection.

2. Bandage pneumatique selon la revendication 1, dans lequel la structure de renforcement (32a, 32b, 54) procure un tampon pour absorber les déformations de cisaillement.

3. Bandage pneumatique selon la revendication 1 ou 2, comprenant une carcasse (22), une bande de roulement (12) disposée en direction radiale à l'extérieur de la carcasse (22) et une structure de ceintures (16) disposée en direction radiale entre la carcasse (22) et la bande de roulement (12).

4. Bandage pneumatique selon au moins une des revendications précédentes, dans lequel la structure de renforcement (32a, 32b, 54) possède une structure comprenant de 5 bouts par 2,54 cm (epi) à 18 bouts par 2,54 cm.

5. Bandage pneumatique selon au moins une des revendications précédentes, dans lequel la matière des premiers fils est différente de la matière des deuxièmes fils, et ou dans lequel au moins un élément choisi parmi la densité, la structure de fil et la valeur dtex des premiers fils est différent du paramètre respectif des deuxièmes fils.

6. Bandage pneumatique selon au moins une des revendications précédentes, dans lequel la matière des premiers fils est du polyaramide et la matière des deuxièmes fils est de la rayonne; et/ou dans lequel les premiers fils représentent des fils de polyaramide possédant une valeur dtex de 940/1 et les deuxièmes fils représentent des fils de rayonne possédant une valeur dtex de 1220/1.

7. Bandage pneumatique selon au moins une des revendications précédentes, dans lequel les premiers fils possèdent une structure de densité de 14 bouts par 2,54 cm (epi) et les deuxièmes fils possèdent une structure de densité de 12 bouts par 2,54 cm ; et/ou dans lequel les premiers fils possèdent une densité supérieure à celle des deuxièmes fils à concurrence d'au moins 2 bouts par 2.54 cm.

8. Bandage pneumatique selon au moins une des revendications précédentes, dans lequel la couche de tissu tricoté comprend un promoteur de l'adhésion disposé par-dessus.

9. Bandage pneumatique selon au moins une des revendications précédentes, dans lequel la languette de protection comprend deux couches ou plus, ou dans lequel la languette de protection comprend deux couches de tissu ou plus et une couche de caoutchouc entre les couches de tissu.

10. Bandage pneumatique selon au moins une des revendications précédentes, dans lequel les premiers fils et/ou les deuxièmes fils comprennent au moins deux fibres constituées par des matières différentes.

11. Bandage pneumatique selon au moins une des revendications précédentes, dans lequel les premiers fils s'étendent en formant un angle de 30 à 55° par rapport à la direction radiale du bandage pneumatique (10).

12. Bandage pneumatique selon au moins une des revendications précédentes, dans lequel le bandage pneumatique (10) est un bandage pneumatique pour véhicule de tourisme permettant de rouler à plat.
